# EUROPÄISCHE PATENTSCHRIFT

(11) **EP 2 248 217 B1**
(45) Veröffentlichungstag und Bekanntmachung des Hinweises auf die Patenterteilung: **09.07.2014**
(21) Anmeldenummer: 09713690.7
(22) Anmeldetag: 25.02.2009
(51) Int. Cl.: H01M 10/04, H01M 2/02, H01M 10/0525, H01M 10/0565, H01M 10/0585

(54) **Dreidimensionale Mikrobatterie und Verfahren zu deren Herstellung**
Three-dimensional microbattery and method for the production thereof
Microbatterie tridimensionnelle et procédé de fabrication relatif

(30) Priorität: 26.02.2008 DE 102008011523
(43) Veröffentlichungstag der Anmeldung: 10.11.2010
(73) Patentinhaber: Fraunhofer-Gesellschaft zur Förderung der angewandten Forschung e.V., 80686 München (DE); VARTA Microbattery GmbH, 30419 Hannover (DE)
(72) Erfinder: HAHN, Robert, 13156 Berlin (DE); WÖHRLE, Thomas, 80807 München (DE); WURM, Calin, 86405 Meitigen (DE)
(74) Vertreter: Pfenning, Meinig & Partner GbR
(86) Internationale Anmeldenummer: PCT/EP2009/001584
(87) Internationale Veröffentlichungsnummer: WO 2009/106365

(56) Entgegenhaltungen:
- WO-A-2005/101973
- JP-A- 2 060 071
- US-A1- 2001 016 290
- US-A1- 2004 076 883
- US-A1- 2007 026 266

## Beschreibung

Die vorliegende Erfindung betrifft eine dreidimensionale Mikrobatterie nach dem Oberbegriff des Anspruchs 1 und ein Verfahren zu deren Herstellung.

Für verschiedene Anwendungen wie energieautarke Mikrosysteme, miniaturisierte Funksensoren, aktive RFID-Tags, medizinische Implantate, Smartcards™ und andere ist es wünschenswert, eine Batterie mit möglichst geringen Abmessungen zu verwenden.

Zur Herstellung von Batterien mit Abmessungen im Millimeterbereich gibt es bisher die folgenden Möglichkeiten:
Sehr kleine Knopfzellen. Aufgrund des großen Anteils des Metallbechers und der Dichtung am Gesamtsystem ist die Energiedichte aber gering. Durch die runde Bauform wird das Volumen im Mikrosystem schlecht ausgenutzt. Zur Kontaktierung sind Lötfahnen oder Federkontakte notwendig, die wiederum die Abmessungen vergrößern.
Sehr kleine zylindrische Zellen mit Metallbecher und Glasdurchführung. Hier ist, wie bei den Knopfzellen die Integration und Kontaktierung schwierig. Die Batterien sind aufgrund des hermetischen Verschlusses sehr langzeitstabil, wegen der aufwendigen Herstellung aber teuer.
Sehr kleine prismatische Batterien, die zwischen den Stromableitern durch ein Polymer mittels Laminierung oder Klebetechnologie angeordnet sind oder in eine Siegelfolie (Pouch) eingepackt wurden. Da der Siegelrand mindestens etwa 2 mm betragen muss, sind jedoch die Miniaturisierung sowie die Energiedichte begrenzt.

Dünnfilmbatterien, bei denen der gesamte Schichtaufbau durch Vakuumbeschichtung hergestellt wird. Bei diesem Verfahren sind die maximal möglichen Schichtdicken der aktiven Elektroden auf ca. 20 µm begrenzt, da sonst die mechanischen Spannungen zu groß werden. Da die Abscheidung auf einem Substrat erfolgen muss und auch eine Verkapselung notwendig ist, deren Gesamtdicke größer als die Dicke der aktiven Materialien ist, ergibt sich eine geringe Gesamtenergiedichte. Aufgrund des anorganischen Festkörper-Ionenleiters besitzen die Batterien eine große Temperaturstabilität. Auch die Strombelastbarkeit ist hoch. Durch das aufwendige und langsame Vakuumverfahren ist der Kostenaufwand aber sehr hoch.

Um bei Dünnfilmverfahren eine höhere Energiedichte zu erzielen, wird in der US2006/0154141 A1 ein dreidimensionaler Aufbau vorgeschlagen. Hierzu wird zunächst eine ganzflächige anorganische Elektrolytschicht mit Kavitäten versehen, die dann mit den aktiven Elektroden und Stromableitern gefüllt werden. Anode und Kathode liegen dabei nebeneinander. Theoretisch kann so eine hohe Energiedichte erzielt werden. Hauptsächlicher Nachteil ist hierbei, dass es sich um Dünnfilm- und Abscheideprozesse handelt, die sehr aufwendig sind. Der dreidimensionale Aufbau ist nur sinnvoll, wenn die Höhe der Struktur größer ist als bei einem sequentiellen Abscheiden von Anode, Elektrolyt und Kathode übereinander. Einen Festkörper-Ionenleiter mit einer Dicke von wesentlich mehr als ca. 20 µm herzustellen ist jedoch schwierig. Außerdem kommt die Ionenleitfähigkeit nur in Z-Richtung senkrecht zum Substrat aufgrund der sich bei der Abscheidung herausbildenden Mikrostruktur zustande. Bei dreidimensionalem Aufbau wird aber eine Ionenleitfähigkeit parallel zum Substrat benötigt, da Anode (negative Elektrode) und Kathode (positive Elektrode) nebeneinander liegen. Zudem ist die Lithium-IonenLeitfähigkeit der bekannten Festkörper-Ionenleiter bei Raumtemperatur sehr niedrig.

In der US 6 495 283 A wird die Möglichkeit beschrieben, ein dreidimensional strukturiertes Substrat zu nutzen, das auch ein dreidimensional strukturierter Stromableiter oder eine dreidimensional strukturierte Elektrode (Kathode) sein kann, auf dem dann die anderen Schichten abgeschieden werden. Die größte Schwierigkeit bei diesem Verfahren dürfte darin bestehen, einen dreidimensionalen Elektrolyten abzuscheiden, der eine gute Bedeckung senkrechter oder steiler Kan-' ten gewährleistet und gleichzeitig eine hohe Schichtdickenkonstanz bei gleichzeitig guter ionischer Leitfähigkeit besitzt.

Die WO 2005/101973 A offenbart eine Li-Ionen-Mikrobatterie, die ein Substrat aufweist, an dessen Oberfläche eine Vielzahl von Kammern ausgebildet sind. Die Kammern, die alternierend mit Anoden- und Kathodenmaterial gefüllt sind, sind durch mit gelifiziertem Elektrolyt durchtränkte Trennwände getrennt, die aus dem Material des Substrats bestehen.

Es ist die Aufgabe der vorliegenden Erfindung, ein Verfahren zum Herstellen einer dreidimensionalen Mikrobatterie mit einem Substrat, das in einer Vertiefung zwei in der Substratebene nebeneinander liegende Kammern enthält, in denen jeweils die Aktivmassen von negativer und positiver Elektrode und ein Elektrolyt aufgenommen sind, wobei zwischen den beiden Kammern eine poröse, mit dem Elektrolyten durchtränkte und einen Durchgang von aktiver Elektrodenmasse verhindernde Trennwand angeordnet ist, wobei die Aktivmasse von negativer und positiver Elektrode jeweils partikelförmig ausgebildet und mit dem gelifizierten Elektrolyten durchtränkt ist und die freien Oberflächen der Aktivmasse beider Elektroden und der Trennwand in einer Ebene mit einer Oberfläche des Substrats liegen und die Elektroden und die Trennwand durch eine über den Rand der Vertiefung hinausragende Abdeckschicht hermetisch versiegelt sind zur Verfügung zu stellen, durch das die Mikrobatterien kostengünstig und mit hoher Produktivität erhalten werden können.

Diese Aufgabe wird erfindungsgemäß durch ein Verfahren mit den Merkmalen des Anspruchs 1 gelöst. Vorteilhafte Weiterbildungen dieses Verfahrens ergeben sich aus den Unteransprüchen.

Dadurch, dass die freien Oberflächen der Aktivmasse beider Elektroden und der Trennwand in einer Ebene mit einer Oberfläche des Substrats liegen und die Elektroden und die Trennwand durch eine über den Rand der Vertiefungen hinausragende Abdeckschicht hermetisch versiegelt sind, ergibt sich eine Mikrobatterie von hoher mechanischer Integrität und erheblicher Energiedichte.

Das erfindungsgemäße Verfahren enthält die Schritte:
Bilden einer Vertiefung in dem Substrat mit gleichzeitiger oder nachfolgender Ausbildung einer porösen Trennwand senkrecht zur die Vertiefung enthaltenden Substratoberfläche zur Bildung von zwei Kammern in der Vertiefung,

Herstellen der Stromableiter für die Elektroden in den beiden Kammern,
Einfüllen von partikelförmiger Aktivmasse für die positive und die negative Elektrode jeweils in eine der Kammern der Vertiefung,
Einfüllen eines flüssigen Elektrolyten in die Vertiefung zur Durchträsskung der Aktivmane jeweils der positiven und der negativen Elektrode sowie der Trennwand, Gelifizieren des Elektrolyten, und
hermetisches Verschließen der Vertiefung.

Dieses Verfahren ermöglicht die Herstellung der porösen Trennwand, der notwendigen Isolierungen, elektrische Durchführungen und Stromableiter, bevor die aktiven Batteriebestandteile hinzugefügt werden. Dadurch können Hochtemperatur- und Vakuumprozesse, Naßprozesse (Galvanik), fotolithografische Prozesse und dergleichen durchgeführt werden, die ansonsten nicht mit den aktiven Batteriematerialien kompatibel sind. Eine hohe Produktivität wird erhalten, wenn die Aktivmassen gleichzeitig für viele (vorzugsweise einige Tausende) Mikrobatterien beispielsweise durch Siebdruck, Schablonendruck, Dispergieren, Sprühen oder in anderer Weise auf das Substrat aufgebracht werden. Nach der Gelifizierung des Elektrolyten muss lediglich ein Deckel oder eine hermetische Beschichtung aufgebracht werden, die mit den Batteriematerialien kompatibel ist. Dadurch, dass Polymerelektrolyte verwendet werden können, ist eine hohe ionische Leitfähigkeit und damit Strombelastbarkeit möglich, wobei die Abmessungen und damit die Kapazität in weiten Grenzen variiert werden können. Es können Elektrodenmaterialien verwendet werden, die auch für größere Batterien eingesetzt werden. Durch Gelifizierung des Elektrolyten können für das hermetische Verschließen Vakuumprozesse durchgeführt werden.

Die Erfindung wird im Folgenden anhand von in den Figuren dargestellten Ausführungsbeispielen näher erläutert. Es zeigen:
- Fig. 1: eine Mikrobatterie im Querschnitt mit einem isolierenden Substrat,
- Fig. 2: eine Mikrobatterie im Querschnitt mit einem metallischen Substrat,
- Fig. 3: ein Herstellungsverfahren für eine Mikrobatterie in drei aufeinander folgenden Schritten,
- Fig. 4: ein anderes Herstellungsverfahren für eine Mikrobatterie in drei aufeinander folgenden Schritten,
- Fig. 5: ein weiteres Herstellungsverfahren für eine Mikrobatterie in fünf aufeinander folgenden Schritten, und
- Fig. 6: eine Mikrobatterie im Querschnitt mit einem isolierenden Substrat und einer Kontaktierung an der Oberseite.

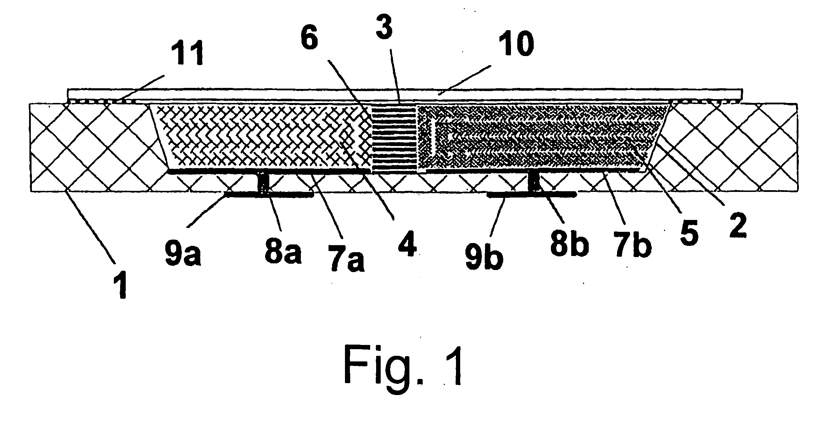

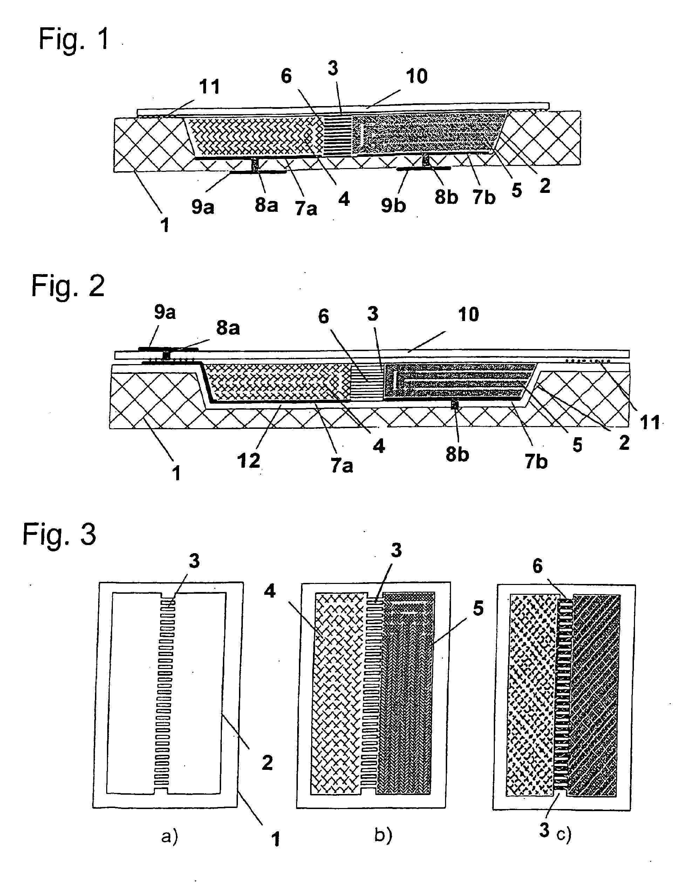

Die Mikrobatterie nach Fig. 1 enthält in einem isolierenden Substrat 1 eine Vertiefung 2, die in der Mitte eine senkrecht zur Zeichenebene verlaufende poröse Trennwand 3 aufweist. Im Bereich links der Trennwand 3 ist die Vertiefung 2 zur Bildung der einen Elektrode (Anode) mit Anodenmasse 4 gefüllt, und im Bereich rechts der Trennwand 3 ist die Vertiefung 2 zur Bildung der anderen Elektrode (Kathode) mit Kathodenmaterial 5 gefüllt. Weiterhin sind das Anoden- und das Kathodenmaterial sowie die Trennwand 3 vollständig mit gelifiziertem Elektrolyten 6 getränkt. Am Boden der Vertiefung 2 befinden sich unterhalb der Anode 4 bzw. der Kathode 5 jeweils ein Stromableiter 7a bzw. 7b, die jeweils über eine elektrische Durchführung 8a bzw. 8b mit einem Außenkontakt 9a bzw. 9b auf der Unterseite des Substrats 1 verbunden sind. Die oberen Oberflächen des Substrats 1, der Anode 4, der Trennwand 3 und der Kathode 5 bilden eine ebene und möglichst glatte Fläche, so dass die Mikrobatterie mit einem ebenen Deckel 10 verschlossen werden kann. Ein geeignetes, die Vertiefung 2 umgebendes Verbindungsmaterial 11 zwischen dem Deckel 10 und dem Substrat 1 bewirkt eine hermetische Abdichtung der Vertiefung 2.

Die Herstellung dieser Mikrobatterie erfolgt in der Weise, dass zunächst die Vertiefung 2 im Substrat 1 hergestellt wird. Gleichzeitig mit der Herstellung der Vertiefung 2 oder anschließend an diese wird die poröse Trennwand 3 ausgebildet. Hiernach werden im Anoden- sowie im Kathodenbereich die elektrischen Durchführungen 8a, 8b, die Stromableiter 7a, 7b und die Außenkontakte 9a, 9b hergestellt. Es werden dann die Anoden- und Kathodenmaterialien 4 und 5 in die Vertiefung 2 eingefüllt und diese sowie die Trennwand 3 anschließend mit dem flüssigen Elektrolyten 6 getränkt, der nachfolgend gelifiziert wird. Zum Schluss wird der Deckel 10 aufgebracht und hierdurch die Mikrobatterie hermetisch abgedichtet.

Als Substrat kann vorzugsweise Glas, Silizium oder Keramik verwendet werden. Das beschriebene Verfahren ermöglicht die gleichzeitige Herstellung einer Vielzahl von Mikrobatterien in demselben Substrat. Es kann ein gemeinsamer Deckel 10 für alle Mikrobatterien in dem Substrat 1 aufgebracht werden. Auch die anschließende Formung und Prüfung der Batterien in dem Substrat kann noch im Verbund stattfinden. Anschließend werden die Batterien vereinzelt.

Es ist wichtig, dass die abzudeckende Oberfläche möglichst glatt und eben ist, damit beim Aufkleben des Deckels nur eine dünne Klebefuge erhalten wird. Die Mikrobatterie nach Fig. 2 unterscheidet sich von der in Fig. 1 gezeigten im Wesentlichen dadurch, dass ein elektrisch leitendes, metallisches Substrat verwendet wird. Dies macht eine elektrische Isolierung der Mikrobatterie gegenüber dem Substrat 1 durch eine isolierende Schicht 12 erforderlich. Diese kann z.B. aus einem Polymer wie polychloriertes Biphenyl (PCB) oder Polyimid (PI) bestehen oder auch eine glasartige oder keramische Schicht sein. Eine elektrische Durchführung 8b durch die isolierende Schicht 12 verbindet den Stromableiter 7b und das Substrat 1, so dass das Substrat 1 als elektrischer Anschluss der Kathode 5 verwendet werden kann. Für die Kontaktierung der Anode 4 wird der zugehörige Stromableiter 7a über den Rand der Vertiefung 2 hinaus geführt und eine elektrische Durchführung 8a durch den Deckel 10 verbindet ihn mit dem auf der Außenseite des Deckels 10 angebrachten Außenkontakt 9a.

Fig. 3 zeigt ein Verfahren zur Herstellung der Mikrobatterie in drei Schritten. Das verwendete Substrat 1 besteht aus Silizium. Durch einen Ätzvorgang werden die Vertiefung 2 und die Porosität der Trennwand 3 hergestellt. Es ist wichtig, dass die Trennwand 3 eine große Porosität und eine gute Öffnung parallel zur Substratebene aufweist. Die in Fig. 3a) gezeigte Trennwand 3 besteht aus nahe beieinander liegenden Stegen. Die Abstände zwischen den Stegen sind so klein, dass beim Einfüllen des Anoden- bzw. Kathodenmaterials in die Vertiefung 2 keine Partikel von diesen in die Schlitze zwischen den Stegen gelangen können. Die Schlitze können gemeinsam mit dem Herstellen der Vertiefung 2 beispielsweise durch reaktives Ionenätzen hergestellt werden. Fig. 3b) zeigt den Zustand nach dem Einfüllen des Anodenmaterials 4 in die linke Kammer und des Kathodenmaterials 5 in die rechte Kammer der Vertiefung 2. Die Schlitze in der Trennwand 3 sind frei von Elektrodenmaterial.

Fig. 3c) zeigt den Zustand nach dem Einfüllen des flüssigen Elektrolyten 6 in die Vertiefung 2. Der Elektrolyt 6 durchtränkt das Elektrodenmaterial und füllt die Schlitze in der Trennwand 6, bevor er gelifiziert wird.

Aus Fig. 3 ist ersichtlich, dass die Mikrobatterie in der Draufsicht vorzugsweise eine rechteckige Konfiguration hat, wobei die Seitenkanten parallel zur Trennwand 3 länger als die hierzu senkrechten Seitenkanten sind. Hierdurch wird erreicht, dass die Wege der Ionen durch die Elektroden 4, 5 und die Trennwand 3 möglichst kurz sind.

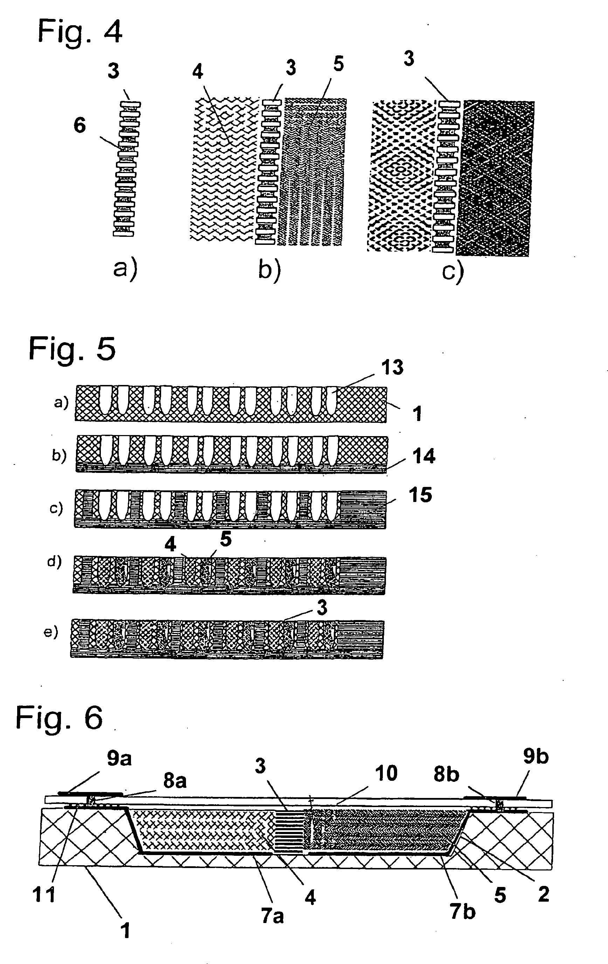

Bei dem in Fig. 4 dargestellten Verfahren wird nach dem Herstellen der Vertiefung 2 und der Trennwand 3 der flüssige Elektrolyt 6 zunächst nur in die Schlitze der Trennwand 3 beispielsweise durch Mikrodispensieren eingebracht. Der Elektrolyt wird in diesen Schlitzen durch die Oberflächenspannung gehalten, wie Fig. 4a) zeigt. Anschließend wird der Elektrolyt 6 durch einen thermischen Prozess gelifiziert. Es werden dann das Anodenmaterial 4 und das Kathodenmaterial 5 in die jeweilige Kammer der Vertiefung 2 eingeführt (Fig. 4b)). Diese Materialien können sehr feinkörnig sein, da ein Durchgang von diesen durch den gelifizierten Elektrolyten 6 in den Schlitzen verhindert wird. Anschließend wird in einem zweiten Schritt der Zuführung von flüssigem Elektrolyten 6 das Elektrodenmaterial 4, 5 mit diesem durchtränkt. Nachdem auch dieser gelifiziert wurde, wird die in Fig. 4c) gezeigte Struktur erhalten, die mit der in Fig. 3c) gezeigten identisch ist.

Bei Verwendung eines Substrats aus Glas oder Keramik können die mikroporösen Stege in der Trennwand in ähnlicher Weise wie bei der Herstellung von Filtern erzeugt werden. Die Kammern der Vertiefung werden durch Ätzen oder Laserablation hergestellt, oder es werden ein geschlossenes Substrat und ein Substrat, das eine Rahmenstruktur aufweist, miteinander verbunden. Es ist jedoch auch möglich, von einem vollständig porösen Substrat auszugehen, in welchem durch Laserbearbeitung Vertiefungen hergestellt werden und anschließend durch Beschichtung eine Abdichtung der Elektrodenwannen nach außen erfolgt. Fig. 5 zeigt ein derartiges Verfahren, bei dem gleichzeitig mehrere Mikrobatterien in dem Substrat 1 hergestellt werden.

Gemäß Fig. 5a) werden in dem durchgängig porösen Glas- oder Keramiksubstrat 1 mittels Laserablation oder in anderer weise Sacklöcher 13 mit hohem Aspektverhältnis hergestellt. Jeweils zwei eng benachbarte Sacklöcher 13 werden für die Bildung einer Mikrobatterie verwendet. Anschließend wird, wie Fig. 5b) zeigt, der untere Bereich des Substrats 1 von der Unterseite her mit einem Material 14 abgedichtet, indem die Poren des Substrats 1 mit diesem Material gefüllt werden, das eine definierte Benetzung in dem porösen Substrat 1 besitzt und kompatibel mit den Elektrodenmaterialien ist. Das abdichtende Material 14 erstreckt sich von der Unterseite des Substrats 1 bis zum Boden der Sacklöcher 13.

Dann werden durch ein Material 15, das die gleichen abdichtenden Eigenschaften wie das Material 14 hat, aber dispensierbar oder druckbar ist, die Isolationsbereiche zwischen den einzelnen Mikrobatterien, d.h. den Anordnungen aus jeweils zwei Sacklöchern 13, beschichtet und damit die Porosität des Substratmaterials in diesen Bereichen beseitigt. Da sich das von unten zugeführte Material 14 und das von oben zugeführte Material 15 gegenseitig berühren, entstehen völlig dichte Batteriewannen, wie in Fig. 5c) gezeigt ist.

Die Beschichtung der Innenwände der Sacklöcher 13 mit dem Stromableiter ist nicht dargestellt. Diese kann in bekannter Weise durch Siebdruck, Schablonendruck, Dispensieren, Dünnfilmbeschichtung, Lithografie oder dergleichen erfolgen. Bei Keramiksubstraten bieten sich vor allem Dickschichtprozesse an. Diese Schichten können auch gemeinsam mit den Abdichtungsmaterialien 14 und 15 eingebrannt werden. Auf diese Weise entstehen sehr stabile, zuverlässige Schichten. Anschließend werden die Elektrodenmaterialien 4, 5 eingefüllt (Fig. 5d)). Die Batterien werden schließlich funktionsfähig durch Einbringen des flüssigen Elektrolyten 6 in die einzelnen Batteriewannen, in denen er das Elektrodenmaterial 4, 5 sowie die zwischen den Sacklöchern 13 einer Batterie stehen gebliebene Trennwand 3 aus dem porösen Substratmaterial durchtränkt, und nachfolgendes thermisches Gelifizieren des Elektrolyten (Fig. 5e)).

Anstelle der Verwendung von Substratmaterial für die Trennwand können auch poröse Separatoren-Membranen aus anderen Materialien eingesetzt werden. Derartige, in der Regel auf Polyolefinen basierende Membranen können ohne Vorbehandlung in die Zellen eingesetzt werden.

Fig. 6 zeigt einen Querschnitt durch eine Mikrobatterie mit isolierendem Substrat 1, bei der im Unterschied zu der in Fig. 1 dargestellten Mikrobatterie die Außenkontakte 9a, 9b sich auf der Oberseite befinden. Beide Stromableiter 7a, 7b sind jeweils über den Rand der Vertiefung 2 hinaus geführt und mit einer elektrischen Durchführung 8a bzw. 8b durch den Deckel 10 verbunden, die ihrerseits an den Außenkontakt 9a bzw. 9b angeschlossen ist. Die Durchführungen 8a und 8b befinden sich jeweils im Verbindungsbereich 11, können jedoch auch außerhalb von diesem angeordnet sein.

Anstelle des Deckels 10 können zum hermetischen Abdichten auch Folien auf die Batteriestruktur auflaminiert werden oder eine Verkapselung durch Schichtabscheidung erfolgen. Beispielsweise können Parylene aufgebracht werden sowie zur besseren Hermetisierung ein Schichtverbund aus Isolator- und Metallschichten. Falls die elektrischen Kontakte zur Oberseite herausgeführt werden, werden die Durchführungen durch Strukturierung mittels Laser oder Lithografie und Ätzen hergestellt.

Die Außenabmessungen der erfindungsgemäßen Mikrobatterie sollten zwischen 0,1 und 20 mm, vorzugsweise zwischen 0,4 und 5 mm liegen. Ihre Dicke sollte zwischen 5 und 500 µm, bevorzugt zwischen 50 und 200 µm betragen. Die Dicke der Trennwand 3 sollte im Bereich zwischen 1 und 1000 µm, bevorzugt zwischen 10 und 100 µm liegen. Der Anoden- (negative Elektrode) und der Kathodenbereich (positive Elektrode) sollten jeweils eine Breite zwischen 0,01 und 5 mm, vorteilhaft zwischen 0,1 und 2 mm, und eine Länge zwischen 0,1 und 20 mm, vorteilhaft zwischen 1 und 10 mm aufweisen. Die spezifische Kapazität der Mikrobatterie sollte zwischen 0,5 und 4 mAh/cm² betragen.

Als Beispiele für aktive Elektodenmaterialien in wiederaufladbaren Lithium-Ionen-Zellen sind für die Anode MCMB (vollsynthetischer Graphit) sowie diverse Naturgraphite, für die Kathode LiCoO₂ (Lithium-Kobaltoxid) und für den Binder PVDF-HFP-Co-Polymer, sowie PVDF-Homopolymer zu nennen. Als Gel-Elektrolyte eignen sich EC+PC+LiPF₆ sowie (EC)+GBL+LiBF₄.

Alternative Anodenmaterialien sind Li-Titanat (Li₄Ti₅O₁₂), Li₂₂Si₅, LiA₁, Li₂₂Sn₅, Li₃Sb und LiWO₂, sowie alternative Kathodenmaterialien LiNiO₂, LiMn₂O₄, LiNi_{0,8}CO_{0,2}O₂, Lithiumeisenphosphat (LiFePO₄) und nanostrukturierte Materialien.

Interessant sind vor allem Materialien mit hoher Lebensdauer und Zyklenstabilität, da die Mikrobatterie integriert wird und während der gesamten Lebensdauer der jeweiligen Vorrichtung als Puffer funktionieren soll. Von Bedeutung ist auch eine hohe Impuls-Strombelastung (C-Rate).

Prinzipiell sind auch wässerige Batteriesysteme möglich sowie auch Primärbatterien. Als Beispiel hierfür wird ein System der Flachzelle LFP25 genannt. Der prinzipielle Aufbau ist ein 3V-System, bei dem metallisches Lithium (Anode) gegen Braunstein (MnO₂) als Kathode eingesetzt wird. Als Elektrolyt dient ein auf Lithium-Perchlorat (LiClO₄) basierender Elektrolyt.

Das Anwendungsgebiet für die erfindungsgemäße Mikrobatterie ist die elektrische Stromversorgung von Mikrosystemen, insbesondere für energieautarke Mikrosysteme, Zwischenspeicher für miniaturisierte Funksensoren, Zwischenspeicher für Energy-Harvesting-Devices, d.h. energieautarke Systeme, die ihre Energie aus der Umwelt beziehen, aktive RFID-Tags, medizinische Implantate, Wearable Computing, Backup-Batterie in Mikrosystemen, Chipkarten, Speicherchips, Systems in Package, Systems on Chip, miniaturisierte Datenlogger sowie intelligente Munition.

## Patentansprüche

1. Verfahren zum Herstellen einer dreidimensionalen Mikrobatterie mit einem Substrat (1), das in einer Vertiefung (2) zwei in der Substratebene nebeneinander liegende Kammern enthält, in denen jeweils die Aktivmasse (4, 5) von negativer und positiver Elektrode und ein Elektrolyt (6) aufgenommen sind, wobei zwischen den beiden Kammern eine poröse, mit dem gelifizierten Elektrolyten (6) durchtränkte und einen Durchgang von aktiver Elektrodenmasse (4, 5) verhindernde Trennwand (3) angeordnet ist,
wobei die Aktivmasse (4, 5) von negativer und positiver Elektrode jeweils partikelförmig ausgebildet und mit dem gelifizierten Elektrolyten (6) durchtränkt ist und die freien Oberflächen der Aktivmasse (4, 5) beider Elektroden und der Trennwand (3) in einer Ebene mit einer Oberfläche des Substrats (1) liegen und die Elektroden und die Trennwand (3) durch eine über den Rand der Vertiefung (2) hinausragende Abdeckschicht (10) hermetisch versiegelt sind,
**gekennzeichnet durch** die Schritte:
Bilden einer Vertiefung (2) in dem Substrat, mit gleichzeitiger oder nachfolgender Ausbildung einer porösen Trennwand (3) senkrecht zur die Vertiefung (2) enthaltenden Substratoberfläche zur Bildung von zwei Kammern in der Vertiefung (2),
Herstellen der Stromableiter (7a, 7b) für die Elektroden in den Kammern,
Einfüllen von partikelförmiger Aktivmasse (4, 5) für die positive und die negative Elektrode jeweils in eine der Kammern der Vertiefung (2),
Einfüllen eines flüssigen Elektrolyten (6) in die Vertiefung (2) zur Durchtränkung der Aktivmasse (4, 5) jeweils der positiven und der negativen Elektrode sowie der Trennwand (3),
Gelifizieren des Elektrolyten (6), und
hermetisches Verschließen der Vertiefung (2).

2. Verfahren nach Anspruch 1, **dadurch gekennzeichnet, dass** vor dem Einfüllen der Aktivmasse (4, 5) eine elektrische Verbindung (8a, 8b) zwischen mindestens einem der Stromableiter (7a, 7b) und der der die Vertiefung (2) enthaltenden Substratoberfläche gegenüberliegenden Substratoberfläche durch das Substrat (1) hindurch hergestellt wird.

3. Verfahren nach Anspruch 1 oder 2, **dadurch gekennzeichnet, dass** eine Vielzahl von Mikrobatterien gleichzeitig in demselben Substrat (1) hergestellt wird.

4. Verfahren nach einem der Ansprüche 1 bis 3, **dadurch gekennzeichnet, dass** bei Verwendung eines metallischen Substrats (1) vor dem Herstellen der Stromableiter (7a, 7b) in den Kammern die Innenfläche der Vertiefung (2) mit einer Isolierschicht (12) versehen wird.

5. Verfahren nach Anspruch 4, **dadurch gekennzeichnet, dass** vor dem Einfüllen der Aktivmasse (5) eine elektrische Verbindung (8b) zwischen einem der Stromableiter (7b) und dem Substrat (1) durch die Isolierschicht (12) hindurch hergestellt wird.

6. Verfahren nach einem der Ansprüche 1 bis 3, **dadurch gekennzeichnet, dass** bei Verwendung eines Siliziumsubstrats (1) die gleichzeitige Bildung der Vertiefung (2) und der porösen Trennwand (3) durch reaktives lonenätzen erfolgt.

7. Verfahren nach Anspruch 6, **dadurch gekennzeichnet, dass** vor dem Einfüllen der Aktivmasse (4, 5) ein Teil des Elektrolyten (6) in die Trennwand (3) eingebracht und gelifiziert wird.

8. Verfahren nach einem der Ansprüche 1 bis 3, **dadurch gekennzeichnet, dass** bei Verwendung eines porösen Substrats (1) die Vertiefung durch abdichtendes Ausfüllen der Poren des Substrats (1) im die Mikrobatterie umgebenden Bereich und innerhalb der Vertiefung die beiden Kammern (13) durch Entfernen des Substratmaterials gebildet werden.

9. Verfahren nach einem der Ansprüche 1 bis 5, **dadurch gekennzeichnet, dass** die Trennwand (3) nach dem Ausbilden einer durchgehenden Vertiefung (2) aus einem von dem Substratmaterial verschiedenen Material eingesetzt wird.

## Claims

1. Method for the production of a three-dimensional microbattery having a substrate (1) which comprises, in a depression (2), two chambers which are situated adjacently in the substrate plane and in which respectively the active mass (4, 5) of negative and positive electrode and an electrolyte (6) are received, a porous partition wall (3), which is saturated with the gelified electrolyte (6) and prevents passage of active electrode mass (4, 5), being disposed between the two chambers,
the active mass (4, 5) of negative and positive electrode respectively having a particle-shaped form and being saturated with the gelified electrolyte (6) and the free surfaces of the active mass (4, 5) of both electrodes and of the partition wall (3) being situated in one plane with a surface of the substrate (1) and the electrodes and the partition wall (3) being hermetically sealed by a cover layer (10) projecting beyond the edge of the depression (2),
**characterised by** the steps:
formation of a depression (2) in the substrate with simultaneous or subsequent formation of a porous partition wall (3) perpendicular to the substrate surface containing the depression (2) for forming two chambers in the depression (2),
production of the current collectors (7a, 7b) for the electrodes in the chambers,
pouring particle-shaped active mass (4, 5) for the positive and the negative electrode respectively into one of the chambers of the depression (2),
pouring a liquid electrolyte (6) into the depression (2) in order to saturate the active mass (4, 5) respectively of the positive and of the negative electrode and also of the partition wall (3),
gelification of the electrolyte (6) and
hermetic sealing of the depression (2).

2. Method according to claim 1, **characterised in that**, before the active mass (4, 5) is poured in, an electrical connection (8a, 8b) between at least one of the current collectors (7a, 7b) and the substrate surface situated opposite the substrate surface containing the depression (2) is produced through the substrate (1).

3. Method according to claim 1 or 2, **characterised in that** a large number of microbatteries is produced simultaneously in the same substrate (1).

4. Method according to one of the claims 1 to 3, **characterised in that**, when using a metallic substrate (1), the internal surface of the depression (2) is provided with an insulating layer (12) before production of the current collectors (7a, 7b).

5. Method according to claim 4, **characterised in that**, before the active mass (5) is poured in, an electrical connection (8b) between one of the current collectors (7b) and the substrate (1) is produced through the insulating layer (12).

6. Method according to one of the claims 1 to 3, **characterised in that**, when using a silicon substrate (1), simultaneous formation of the depression (2) and of the porous partition wall (3) is effected by reactive ion etching.

7. Method according to claim 6, **characterised in that**, before the active mass (4, 5) is poured in, a part of the electrolyte (6) is introduced into the partition wall (3) and gelified.

8. Method according to one of the claims 1 to 3, **characterised in that**, when using a porous substrate (1), the depression is formed by sealing filling of the pores of the substrate (1) in the region surrounding the microbattery and, within the depression, the two chambers (13) are formed by removing the substrate material.

9. Method according to one of the claims 1 to 5, **characterised in that** the partition wall (3) is inserted after forming a continuous depression (2) made of a different material from the substrate material.

## Revendications

1. Procédé de fabrication d'une microbatterie tridimensionnelle comportant un substrat (1) qui contient dans un creux (2) deux chambres disposées l'une à côté de l'autre dans le plan du substrat, dans chacune desquelles sont reçus la masse active (4, 5) d'une électrode négative et d'une électrode positive et un électrolyte (6), une cloison (3) poreuse, imprégnée de l'électrolyte (6) gélifié et empêchant un passage de la masse active (4, 5) des électrodes, étant disposée entre les deux chambres,
la masse active (4, 5) de l'électrode négative et de l'électrode positive étant réalisée respectivement sous forme de particules et étant imprégnée de l'électrolyte (6) gélifié, et les surfaces libres de la masse active (4, 5) des deux électrodes et de la cloison (3) étant situées dans un plan avec une surface du substrat (1), et les électrodes et la cloison (3) étant scellées hermétiquement par une couche de recouvrement (10) s'avançant au-delà du bord du creux (2),
**caractérisé par** les étapes :
formation d'un creux (2) dans le substrat, avec réalisation simultanée ou consécutive d'une cloison (3) poreuse perpendiculaire à la surface du substrat contenant le creux (2) en vue de la formation de deux chambres dans le creux (2),
réalisation des dérivateurs de courant (7a, 7b) pour les électrodes dans les chambres,
introduction de la masse active (4, 5) en forme de particules pour l'électrode positive et l'électrode négative dans chacune des chambres du creux (2),
introduction d'un électrolyte (6) liquide dans le creux (2) pour l'imprégnation de la masse active (4, 5) respectivement de l'électrode positive et de l'électrode négative, ainsi que de la cloison (3),
gélification de l'électrolyte (6) et fermeture hermétique du creux (2).

2. Procédé selon la revendication 1, **caractérisé en ce que**, avant l'introduction de la masse active (4, 5), une liaison électrique (8a, 8b) est réalisée à travers le substrat (1) entre au moins l'un des dérivateurs de courant (7a, 7b) et la surface du substrat faisant face à la surface du substrat contenant le creux (2).

3. Procédé selon la revendication 1 ou 2, **caractérisé en ce qu'**une pluralité de microbatteries sont réalisées en même temps dans le même substrat (1).

4. Procédé selon l'une quelconque des revendications 1 à 3, **caractérisé en ce qu'**en cas d'utilisation d'un substrat (1) métallique, la face intérieure du creux (2) est revêtue d'une couche isolante (12) avant la réalisation des dérivateurs de courant (7a, 7b) dans les chambres.

5. Procédé selon la revendication 4, **caractérisé en ce que**, avant l'introduction de la masse active (5), une liaison électrique (8b) est réalisée à travers la couche isolante (12) entre l'un des dérivateurs de courant (7b) et le substrat (1).

6. Procédé selon l'une quelconque des revendications 1 à 3, **caractérisé en ce qu'**en cas d'utilisation d'un substrat (1) en silicium, la formation simultanée du creux (2) et de la cloison (3) poreuse est obtenue par gravure ionique réactive.

7. Procédé selon la revendication 6, **caractérisé en ce que**, avant l'introduction de la masse active (4, 5), une partie de l'électrolyte (6) est introduite dans la cloison (3) et est gélifiée.

8. Procédé selon l'une quelconque des revendications 1 à 3, **caractérisé en ce qu'**en cas d'utilisation d'un substrat (1) poreux, le creux est formé par le comblement étanche des pores du substrat (1) dans la zone entourant la microbatterie, et les deux chambres (13) sont formées à l'intérieur du creux par l'enlèvement du matériau du substrat.

9. Procédé selon l'une quelconque des revendications 1 à 5, **caractérisé en ce que** la cloison (3), réalisée dans un matériau différent du matériau du substrat, est insérée après la réalisation d'un creux (2) continu.
